# EUROPEAN PATENT SPECIFICATION

(11) **EP 3 396 588 B1**
(45) Date of publication and mention of the grant of the patent: **18.03.2020**
(21) Application number: 17210955.5
(22) Date of filing: 28.12.2017
(51) Int. Cl.: G06K 9/00, G06F 21/32, G09G 3/00, H01J 11/00, G06F 3/041

(54) **DISPLAY SCREEN, DISPLAY DEVICE AND MOBILE TERMINAL**
ANZEIGEBILDSCHIRM, ANZEIGEVORRICHTUNG UND MOBILES ENDGERÄT
ÉCRAN D'AFFICHAGE, DISPOSITIF D'AFFICHAGE ET TERMINAL MOBILE

(30) Priority: 27.04.2017 CN 201710292547
(43) Date of publication of application: 31.10.2018
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Le, DONGGUAN, GUANGDONG 523860 (CN); ZHANG, Haiping, DONGGUAN, GUANGDONG 523860 (CN)
(74) Representative: Romano, Giuseppe

(56) References cited:
- WO-A1-2017/036072
- CN-A- 106 228 144
- CN-A- 106 385 473
- CN-A- 106 412 166
- CN-A- 106 503 635
- US-A1- 2015 331 508
- US-B1- 6 327 376

## Description

### FIELD

The present disclosure relates to a field of electronic apparatus, and particularly to a display screen, a display device and a mobile terminal.

### BACKGROUND

At present, a front face of a mobile phone is usually provided with a fingerprint recognition module and a display screen, and the fingerprint recognition module is disposed outside the display screen, which is convenient for a user to operate and does not influence display of the display screen. However, with such a structure, a screen-to-body ratio is reduced due to the fingerprint recognition module, so the screen-to-body ratio of the mobile phone can be increased by superposing the fingerprint recognition module and the display screen. In order to combine the display screen and the fingerprint recognition module effectively, a hollow-out groove is disposed in a light-shielding panel of the display screen, and the fingerprint recognition module is fastened to the hollow-out groove. With such a kind of structure, however, the user can easily feel the presence of a color difference between the fingerprint recognition module and the light-shielding panel when observing the display screen, and user experience is reduced.

According to WO 2017036072A1, a fingerprint identification device and a fingerprint identification system are disclosed. The fingerprint identification device comprises: a substrate, a transparent cover plate located right above the substrate; a light source for detection located on a first side of the transparent cover plate; and a photoelectric sensor located on a lower surface side of the transparent cover plate, wherein the refractive index of the transparent cover plate is less than the refractive index of skin in a fingerprint portion of a human finger; the transparent cover plate has a lateral surface on the first side, and an included angle α between the lateral surface and an upper surface of the transparent cover plate is an acute angle; the light source for detection is constructed to provide a light beam toward the lateral surface of the transparent cover plate such that the light beam is incident to the upper surface of the transparent cover plate through the lateral surface of the transparent cover plate, and in the case where the upper surface of the transparent cover plate comes into contact with air, the light beam is totally reflected on the upper surface of the transparent cover plate; and the photoelectric sensor is constructed to receive the light beam reflected back by the upper surface of the transparent cover plate. The fingerprint identification device has an increased accuracy rate.

According to CN106385473A, a shell, a fingerprint module and a mobile terminal are provided. The shell comprises an outer cover plate and an inner cover plate, which are stacked vertically and bonded together. The outer cover plate faces towards users. The outer cover plate or the inner cover plate is provided with a through hole. The part, corresponding to the through hole of the outer cover plate, of the inner cover plate is used for jointing a fingerprint chip, or the through hole of the inner cover plate is for a fingerprint chip to pass through so the fingerprint chip can be jointed on the outer cover plate. The outer cover plate or the inner cover plate is provided with a through hole, so that the distance between the fingerprint chip and a user fingerprint at the through hole of the shell is reduced, and the fingerprint chip can collect fingerprint information easily. Moreover, the through hole only causes stress damage to the outer cover plate or the inner cover plate, the stress of the shell can be reinforced by use of the inner cover plate without no through hole or the outer cover plate without no through hole, and therefore, the production yield of the shell is increased.

According to US20150331508A1, an integrated Silicon-OLED display and touch sensor panel is disclosed. The integrated Silicon-OLED display and touch sensor panel can include a Silicon substrate, an array of transistors, one or more metallization layers, one or more vias, an OLED stack, color filters, touch sensors, and additional components and circuitry. Additional components and circuitry can include an electrostatic discharge device, a light shielding, a switching matrix, one or more photodiodes, a near-infrared detector and near-infrared color filters. The integrated Silicon-OLED display and touch sensor panel can be further configured for near-field imaging, optically-assisted touch, and fingerprint detection. In some examples, a plurality of touch sensors and/or display pixels can be grouped into clusters, and the clusters can be coupled to a switching matrix for dynamic change of touch and/or display granularity.

According to CN106503635A, the invention discloses a cover plate used for optical fingerprint identification. The cover plate comprises a fingerprint identification area, the fingerprint identification area comprises a nontransparent portion and multiple light transmitting portions arranged in the nontransparent portion at intervals, the dimension of each light transmitting portion is smaller than 200 [mu]m, and the proportion scope of the total area of the multiple light transmitting portions to the area of the fingerprint identification area is 20%-35%. In the cover plate, an optical fingerprint module can be arranged below the fingerprint identification area, and since the dimension of each light transmitting portion is smaller than 200[mu]m and the proportion scope of the total area of the multiple light transmitting portions to the area of the fingerprint identification area is 20%-35%, the optical fingerprint module can be visually hidden below the cover plate, the effect of hiding the optical fingerprint module is realized, and it is also ensured that there are enough light passing through the cover plate so as to perform fingerprint identification. The invention further discloses an input assembly and an electronic apparatus.

According to CN106228144A, the invention discloses a fingerprint recognition display device. The display device comprises a light guide plate, a light emitting component and a plurality of photosensitive induction units, wherein the light guide plate is arranged on an emergent light face of a display panel, the light emitting component is capable of emitting modulating light which is transmitted between the light guide plate and a display face of the display device by adopting a manner of total reflection, and the photosensitive induction units are arranged below the light guide plate and arranged in an array manner. When a user touches the display face of the display device with a finger, the fingerprint ridge position contacts the display face to destroy the total reflection transmission of the modulating light at the position, and the modulating light is reflected to the photosensitive induction units below the modulating light, the fingerprint valley position does not contact the display face and cannot affect the total reflection transmission of the modulating light, and the photosensitive induction units below the modulating light cannot receive the modulating light, thus, the detection on fingerprint can be realized by the photosensitive induction units on the basis of photodynamic action, interference with inner part of the display device is not liable to occur, the influence caused by the distance between the photosensitive induction units and the display face of the display device is not liable to occur, and high-quality fingerprint detection can be easily realized.

According to CN106412166A, the invention discloses a terminal and a casing assembly thereof. The casing assembly comprises a casing, an optical path adjusting component and an optical fingerprint sensor; the casing includes a fingerprint input area; the optical path adjusting component is arranged in the casing and changes the direction of light that passes the optical path adjusting component; and the optical fingerprint sensor is arranged in the casing, and at least part of light emitted by the optical fingerprint sensor spreads among the optical fingerprint sensor, the optical path adjusting component and the fingerprint input area to collect fingerprint information in the fingerprint input area. According to the casing assembly of the terminal, the optical fingerprint sensor for collecting the fingerprint information is arranged in the casing, and the optical adjusting component adjusts the light transmission path; and thus, rely on the space size of the optical fingerprint sensor is reduced, the terminal can selects the position of the optical fingerprint sensor flexibly according to characteristics of parts of the terminal itself, and design requirements for the terminal can be met.

According to US6327376B1, an electronic apparatus comprises a fingerprint sensing device (10) having an array of sensing elements (12) carried on a transparent substrate (35) for sensing capacitively the ridge pattern of a fingerprint placed over the array, in which the transparency of the device is utilized to provide additional capabilities. Thus, an optical sensing device (60) may be disposed beneath the device (10) to sense optically through the device a further biometric characteristic, or the presence, of the finger overlying the sensing element array. Substantial transparency can be afforded to the device by forming the sense electrodes (30) of the array from transparent conductive material. In products like mobile telephones, notebook computers, PDAs, smart cards or like portable electronic products of small size such as fingerprint sensing device can then advantageously be arranged overlying a display device with the display output being visible through the device.

### SUMMARY

An objective of the present disclosure is to provide a display screen, a display device and a mobile terminal, which can improve the user experience, such as outlined in the independent claims.

### BRIEF DESCRIPTION OF THE DRAWINGS

To describe the technical solutions of the present disclosure more clearly, the accompanying drawings are briefly introduced in the following.
Fig. 1 is a sectional schematic view of a display screen.
Fig. 2 is another sectional schematic view of a display screen.
Fig. 3 is another sectional schematic view of a display screen.
Fig. 4 is another sectional schematic view of a display screen.
Fig. 5 is a sectional schematic view of a display screen.
Fig. 6 is another sectional schematic view of a display screen.
Fig. 7 is a sectional schematic view of a display device.
Fig. 8 is a sectional schematic view of a mobile terminal.

### DETAILED DESCRIPTION

The technical solutions of the present disclosure are clearly and completely described below with reference to the accompanying drawings.

In the description of the present disclosure, it should be understood that the orientation or the positional relationship indicated by the term "thickness" or the like is based on the orientation or the positional relationship shown in the drawings and merely for the convenience of description and simplified description of the present disclosure rather than implying or the indicating that the device or element must have a particular orientation, be constructed and operated in a particular orientation, and therefore should not be construed as limiting the disclosure.

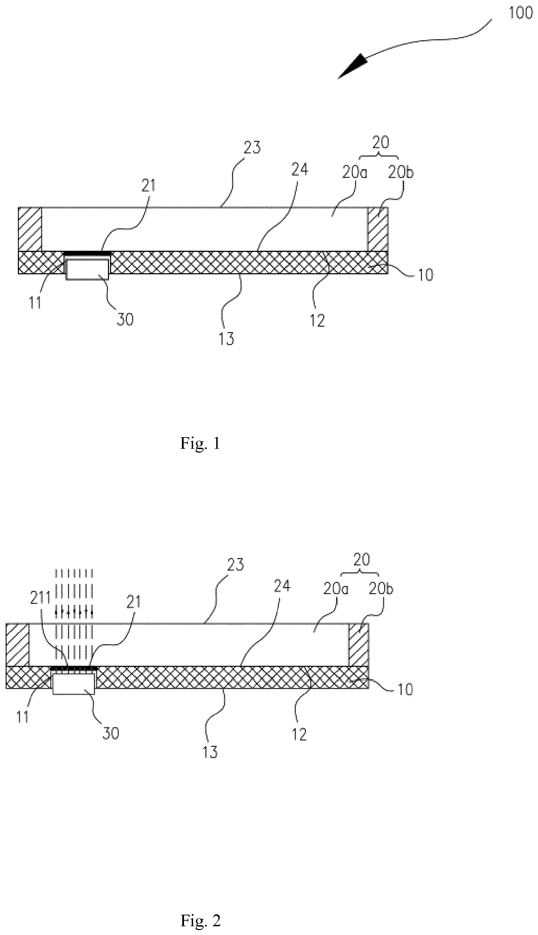

Referring to Fig. 1, the present disclosure provides a display screen 100, including a light-shielding panel 10 and a display panel 20. The light-shielding panel 10 is provided with a hollow-out groove 11, and the hollow-out groove 11 is configured to fasten a fingerprint module 30 therein. The display panel 20 is superposed on a side of the light-shielding panel 10 towards a user. A side of the display panel 20 towards the light-shielding panel 10 is provided with an ink layer 21. An orthographic projection area of the ink layer 21 on the light-shielding panel 10 coincides with the hollow-out groove 11. Chromaticity of the ink layer 21 is consistent with chromaticity of a side of the light-shielding panel 10 towards the display panel 20. It could be understood that a visual effect when the user observes the light-shielding panel 10 through the display panel 20 and a visual effect when the user observes the ink layer 21 through the display panel 20 are consistent, so that visual appearance is integrated when the user observes the display screen 100 and the user experience is improved. The display screen 100 is applied to a mobile terminal, and the mobile terminal can be a mobile phone, a notebook computer, or a tablet computer.

With the ink layer 21 being disposed at the side of the display panel 20 towards the light-shielding panel 10 and the area of the orthographic projection of the ink layer 21 on the light-shielding panel 10 coinciding with the hollow-out groove 11, the ink layer 21 is allowed to block the fingerprint module 30, and the chromaticity of the ink layer 21 is consistent with the chromaticity of the side of the light-shielding panel 10 towards the display panel 20, which reduces the color difference between the ink layer 21 and the light-shielding panel 10 and improves the user experience.

The light-shielding panel 10 is located at a back side of the display panel 20. The light-shielding panel 10 blocks components at the back side for the display panel 20 and prevents the user from seeing the components through the display panel 20, so as to avoid an unclear display image of the display panel 20. The light-shielding panel 10 includes a first surface 12 towards the display panel 20 and a second surface 13 opposite the first surface 12. The hollow-out groove 11 runs through from the first surface 12 to the second surface 13. The fingerprint module 30 is fastened to the hollow-out groove 11 so as to prevent the light-shielding panel 10 from blocking the fingerprint module 30 from sensing a user fingerprint, that is, it is convenient for the fingerprint module 30 to sense the user fingerprint through the display panel 20. An area of the light-shielding panel 10 outside the hollow-out groove 11 is lightproof, so that a display backdrop of the display panel 20 can be formed at the area of the light-shielding panel 10 outside the hollow-out groove 11, which is convenient for the user to view the display image of the display panel 20. The hollow-out groove 11 can be adjacent to a short edge of the light-shielding panel 10. In addition, when the user uses the display screen 100 vertically, the hollow-out groove 11 can be located at a bottom of the light-shielding panel 10, so as to make it convenient for the fingerprint module 30 in the hollow-out groove 11 to acquire the user fingerprint. Certainly, in other embodiments, the light-shielding panel 10 can be provided with a plurality of hollow-out grooves 11, and the fingerprint module 30 can be fastened to each of the hollow-out grooves 11, so that the fingerprint recognition can be performed at a plurality of positions on the display screen 100.

The display panel 20 can display images, the display panel 20 is provided with a display area 20a and a non-display area 20b adjacent to the display area 20a. The display area 20a displays images. The non-display area 20b is provided with an encapsulation configuration and a circuit configuration. When the display panel 20 does not display images, the display area 20a can be pervious to light. An orthographic projection of the hollow-out groove 11 on the display panel 20 is located in the display area 20a, that is, the user can input a fingerprint at a position of the display screen 100 located in the display area 20a. The display panel 20 includes an upper surface 23 and a lower surface 24 opposite the upper surface 23. The upper surface 23 faces the user, and the lower surface 24 is attached to the first surface 12 of the light-shielding panel 10. The ink layer 21 is coated on the lower surface 24. The user can see the ink layer 21 through the display panel 20, but cannot see the fingerprint module 30 through the ink layer 21. The chromaticity of the ink layer 21 is consistent with the chromaticity of the first surface 12 of the light-shielding panel 10, so that the color difference between the ink layer 21 and the first surface 12 is reduced. The visual effects are integrated when user observes the ink layer 21 and the first surface 12 through the display panel 20.

Further, referring to Fig. 2, the fingerprint module 30 is an optical fingerprint module, the ink layer 21 is provided with a plurality of tiny holes 211, and the plurality of tiny holes 211 are configured so that light of the fingerprint module 30 can be transmitted through the plurality of tiny holes 211.

The fingerprint module 30 emits the light towards the user fingerprint, the light is reflected to the fingerprint module 30 by the user fingerprint after being received by the user fingerprint, and the fingerprint module 30 receives the reflected light. According to time difference between the fingerprint module 30 emitting the light and receiving the light, a distance from the fingerprint module 30 to the user fingerprint can be calculated, that is, a distance from the fingerprint module 30 to a peak or trough of the user fingerprint can be measured, so that the image of the user fingerprint can be obtained and the user fingerprint can be acquired. A plurality of beams of light can be transmitted through the plurality of tiny holes 211, that means multi-point acquisition of the user fingerprint is realized, and finally the user fingerprint image is conveniently formed. It could be understood that, the light emitted by the fingerprint module 30 can be transmitted through each of the tiny holes 211, or the light reflected back from the user fingerprint can be transmitted through each of the tiny holes 211, or not only the light emitted by the fingerprint module 30, but also the light reflected back from the user fingerprint can be transmitted through each of the tiny holes 211. Certainly, in other examples not covered by the claims, the fingerprint module 30 can also be a capacitive fingerprint module.

Further, the plurality of tiny holes 211 are arranged in an array. The hollow-out groove 11 is formed to be a rectangular hole. The ink layer 21 is printed on the lower surface 24 of the display panel 20 and opposite the hollow-out groove 11. An area of the ink layer 21 outside the plurality of tiny holes 211 is formed by screen printing, so that the plurality of the tiny holes 211 in the array are formed on the ink layer 21. As the plurality of tiny holes 211 are arranged in the array, it is convenient to acquire the user fingerprint as arrayed point images, i.e. facilitating recording and recognition of the user fingerprint. Certainly, the plurality of tiny holes 211 can also be arranged at random.

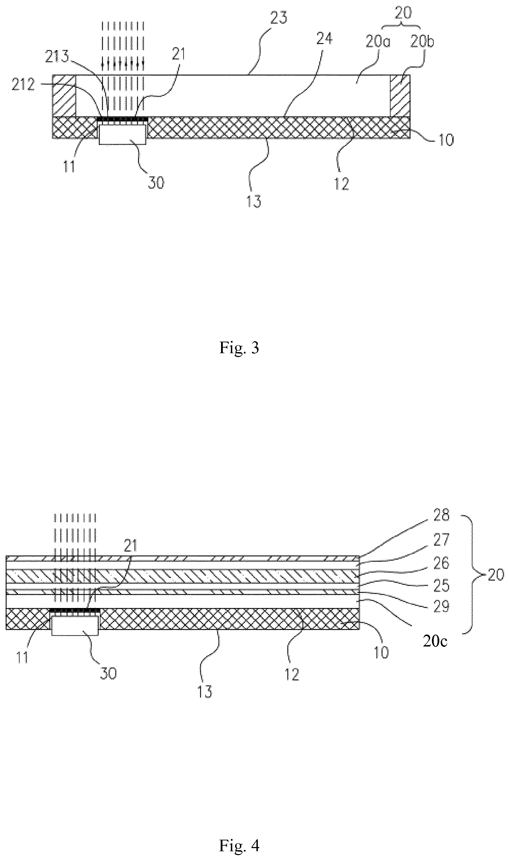

Further, referring to Fig. 3, the plurality of tiny holes 211 includes a first tiny hole 212 and a second tiny hole 213, the first tiny hole 212 is configured so that the light emitted by the fingerprint module 30 can be transmitted outside, and the second tiny hole 213 is configured so that the light reflected from the outside can be transmitted towards the fingerprint module 30.

The ink layer 21 is provided with a plurality pairs of the first tiny hole 212 and the second tiny hole 213. Each of the first tiny holes 212 and each of the second tiny holes 213 are adjacent to each other, and the light sent out through the first tiny hole 212 and the reflected light through the second tiny hole 213 are allowed to be independent from each other and have an improved distinguishing degree, so that the fingerprint acquisition efficiency is improved.

Further, the light-shielding panel 10 is made from foam. The light-shielding panel 10 is bonded to the lower surface 24 of the display panel 20 through an adhesive. The light-shielding panel 10 can protect the display panel 20 effectively, prevent the display panel 20 from being scratched or damaged, and can also avoid light leakage of the display panel 20. The first surface 12 of the light-shielding panel 10 appears black, the area of the ink layer 21 outside the tiny holes 211 also appears black, and the chromaticity of the first surface 12 is consistent with the chromaticity of the area of the ink layer 21 outside the tiny holes 211. Certainly, the light-shielding panel 10 can also be a plastic plate.

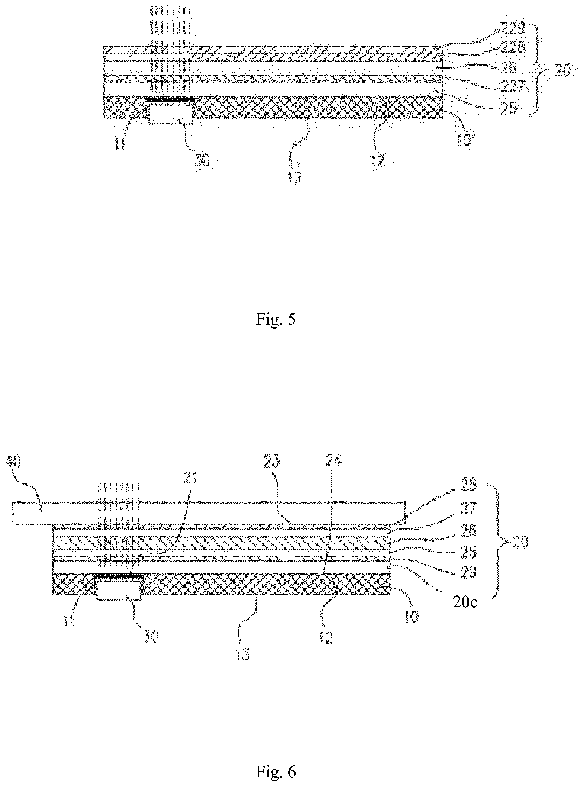

Further, referring to Figs. 4 and 5, the display panel 20 includes a substrate 25 and a display layer 26, the substrate 25 is superposed on the light-shielding panel 10, and the display layer 26 is superposed on a side of the substrate 25 away from the light-shielding panel 10.

As illustrated in Fig. 4, the display panel 20 is a liquid crystal display panel. The substrate 25 is a TFT (Thin Film Transistor) substrate, and the display layer 26 is a liquid crystal layer. The display panel 20 further includes a colorful substrate 27 attached to a side of the display layer 26 away from the substrate 25, an upper polarizer 28 attached to a side of the colorful substrate 27 away from the display layer 26, a lower polarizer 29 attached to a side of the substrate 25 away from the display layer 26, and a backlight source 20c attached to a side of the lower polarizer 29 away from the substrate 25. The upper surface 23 is disposed to the upper polarizer 28, and the lower surface 24 is disposed to the backlight source 20c. When the display screen 100 does not display the images, the display panel 20 can transmit the light of the fingerprint module 30 so as to realize the fingerprint acquisition. Certainly, when the display screen 100 displays the images, the fingerprint module 30 emits the light having a different wave length from the light of the display panel 20, and hence the fingerprint acquisition can be realized as well.

As illustrated in Fig. 5, the display panel 20 is an OLED (Organic Light-Emitting Diode) display panel. The substrate 25 is a glass substrate. The display layer 26 is an organic luminescent layer. The display panel 20 further includes an anode layer 227 attached between the display layer 26 and the substrate 25, a cathode layer 228 attached to a side of the display layer away from the anode layer 227, and an upper polarizer 229 attached to a side of the cathode layer 228 away from the display layer 26. The anode layer 227 and the cathode layer 228 drive the display layer 26 to give out light. The upper surface 23 is disposed to the upper polarizer 229, and the lower surface 24 is disposed to the anode layer 227.

Further, referring to Fig. 6, the display screen 100 further includes a light-transparent cover plate 40, the light-transparent cover plate 40 is superposed on a side of the display panel 20 away from the light-shielding panel 10, and the light-transparent cover plate 40 covers the display panel 20.

The light-transparent cover plate 40 is a glass plate. The light-transparent cover plate 40 and the display panel 20 are bonded together through an optical adhesive. The light-transparent cover plate 40 protects the display panel 20 from being scratched. When the finger of the user touches the light-transparent cover plate 40 and is corresponding to the position of the hollow-out groove 11 of the light-shielding panel 10, the fingerprint module 30 acquires the fingerprint of the user's finger.

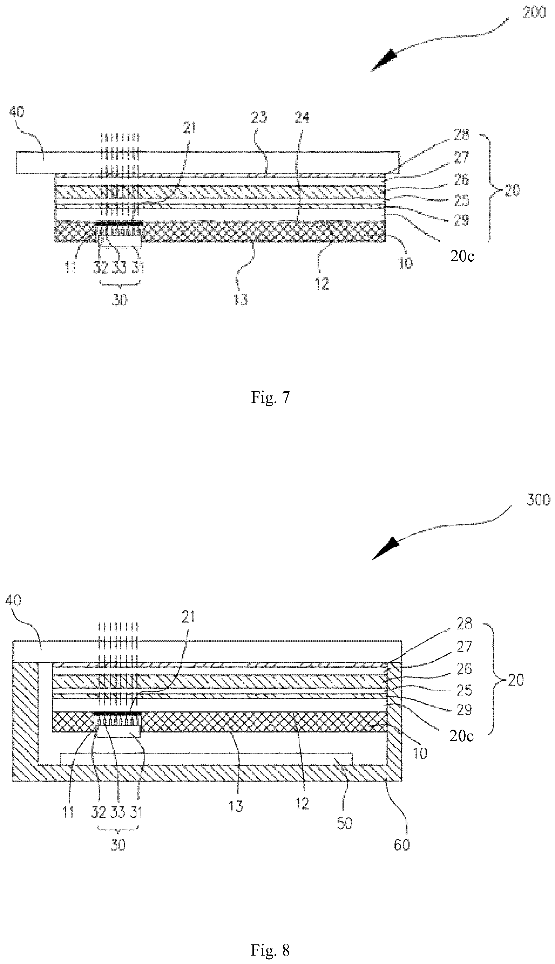

Referring to Fig. 7, the present disclosure further provides a display device 200. The display device 200 includes the above-mentioned display screen 100 and further includes a fingerprint module 30, the fingerprint module 30 being fastened to the hollow-out groove 11.

The fingerprint module 30 is fastened into the hollow-out groove 11 and attached to the ink layer 21. The fingerprint module 30 includes a base 31, a light emitting source 32 and a light receiving source 33. The base 31 is a plate. A plurality of light emitting sources 32 is provided, and a plurality of light receiving sources 33 is provided. The plurality of the light emitting source 32 and the plurality of the light receiving source 33 are arrayed on the base 31 together. Each of the light emitting sources 32 is corresponding to the first tiny hole 212, and the light receiving source 33 is corresponding to the second tiny hole 213. The light emitting source 32 emits the light towards the user fingerprint through the first tiny hole 212 and the display panel 20, and the light receiving source 33 receives the light reflected from the user fingerprint through the display panel 20 and the second tiny hole 213.

Referring to Fig. 8, the present disclosure further provides a mobile terminal 300, and the mobile terminal 300 includes the above-mentioned display device 200 and further includes a main board 50 and a back casing 60. The display screen 100 and the back casing 60 are fitted together, the main board 50 is fastened between the back casing 60 and the display screen 100, and the fingerprint module 30 is electrically connected to the main board 50 and transmits the acquired user fingerprint to the main board 50. It could be understood that the mobile terminal 300 can be a mobile phone, a tablet computer, or a notebook computer and the like.

With the ink layer being disposed at the side of the display panel towards the light-shielding panel and the area of the orthographic projection of the ink layer on the light-shielding panel coinciding with the hollow-out groove, the ink layer is allowed to block the fingerprint module, and the chromaticity of the ink layer is consistent with the chromaticity of the side of the light-shielding panel towards the display panel, which reduces the color difference between the ink layer and the light-shielding panel and improves the user experience.

## Claims

1. A display device, comprising a display screen (100) and an optical fingerprint module (30), the display screen (100) comprising a light-shielding panel (10) and a display panel (20), the light-shielding panel and the optical fingerprint module being located at a back side of the display panel, the light-shielding panel (10) being provided with a hollow-out groove (11), the optical fingerprint module (30) being fastened to the hollow-out groove (11), the display panel (20) being configured to be superposed on a side of the light-shielding panel (10) towards a user, a side of the display panel (20) towards the light-shielding panel (10) being provided with an ink layer (21), an orthographic projection area of the ink layer (21) on the light-shielding panel (10) coinciding with the hollow-out groove (11), and chromaticity of the ink layer (21) being consistent with chromaticity of a side of the light-shielding panel (10) towards the display panel (20);
wherein the light-shielding panel (10) comprises a first surface (12) towards the display panel (20) and a second surface (13) opposite the first surface (12), the hollow-out groove (11) runs through from the first surface (12) to the second surface (13),
wherein the ink layer (21) is provided with a plurality of tiny holes, and the plurality of tiny holes are configured so that light of the optical fingerprint module (30) can be transmitted;
wherein the plurality of tiny holes includes a first tiny hole (212) and a second tiny hole (213), the first tiny hole (212) is configured so that the light emitted by the optical fingerprint module (30) can be transmitted outside, and the second tiny hole (213) is configured so that the light reflected from the outside can be transmitted towards the optical fingerprint module (30).

2. The display device according to claim 1, wherein the light-shielding panel (10) is provided with a plurality of hollow-out grooves (11), and a plurality of the optical fingerprint modules (30) is fastened to the plurality of hollow-out grooves (11) respectively.

3. The display device according to claim 1, wherein the plurality of tiny holes are arranged in an array.

4. The display device according to any one of claims 1 to 3, wherein the light-shielding panel (10) is made from foam.

5. The display device according to any one of claims 1 to 4, wherein the display panel (20) comprises a substrate (25) and a display layer (26), the substrate (25) is superposed on the light-shielding panel (10), and the display layer (26) is superposed on a side of the substrate (25) away from the light-shielding panel (10).

6. The display device according to claim 5, wherein the display panel (20) is a liquid crystal display panel (20), the substrate (25) is a thin film transistor substrate (25), and the display layer (26) is a liquid crystal layer.

7. The display device according to claim 6, wherein the display panel (20) further comprises a colorful substrate (27) attached to a side of the display layer (26) away from the substrate (25), an upper polarizer (28) attached to a side of the colorful substrate (27) away from the display layer (26), a lower polarizer (29) attached to a side of the substrate (25) away from the display layer (26), and a backlight source (20c) attached to a side of the lower polarizer (29) away from the substrate (25).

8. The display device according to claim 5, wherein the display panel (20) is an organic light-emitting diode display panel (20), the substrate (25) is a glass substrate, and the display layer (26) is an organic luminescent layer.

9. The display device according to any one of claims 1 to 8, wherein the display screen (100) further comprises a light-transparent cover plate (40), the light-transparent cover plate (40) is superposed on a side of the display panel (20) away from the light-shielding panel (10), and the light-transparent cover plate (40) covers the display panel (20).

10. The display device according to any one of claims 1 to 9, wherein the optical fingerprint module (30) comprises a base (31), a light emitting source (32), and a light receiving source (33), the light emitting source (32) and the light receiving source (33) are both fastened to the base (31), the light emitting source (32) is configured to emit light to the outside through the display panel (20), and the light receiving source (33) is configured to receive the light reflected from the outside through the display panel (20).

11. A mobile terminal, comprising a display device according to any one of claims 1 to 10.

## Patentansprüche

1. Anzeigevorrichtung umfassend einen Bildschirm (100) und ein optisches Fingerabdruckmodul (30), wobei der Bildschirm (100) ein lichtabschirmendes Panel (10) und ein Anzeigepanel (20) umfasst, wobei das lichtabschirmende Panel und das optische Fingerabdruckmodul an einer Rückseite des Anzeigepanels angeordnet sind, wobei das lichtabschirmende Panel (10) mit einer ausgehöhlten Aussparung (11) versehen ist, das optische Fingerabdruckmodul (30) an der ausgehöhlten Aussparung (11) befestigt ist, das Anzeigepanel (20) eingerichtet ist, um über eine zu einem Benutzer gerichtete Seite des lichtabschirmenden Panels (10) gelegt zu werden, eine zu dem lichtabschirmenden Panel (10) gerichtete Seite des Anzeigepanels (20) mit einer Farbschicht (21) versehen ist, eine orthografische Projektionsfläche der Farbschicht (21) auf dem lichtabschirmenden Panel (10) mit der ausgehöhlten Aussparung (11) zusammenfällt und die Farbigkeit der Farbschicht (21) übereinstimmt mit einer Farbigkeit einer zu dem Anzeigepanel (20) gerichteten Seite der lichtabschirmenden Platte (10);
wobei das lichtabschirmende Panel (10) eine erste zu dem Anzeigenpanel (20) gerichtete Oberfläche (12) und eine zweite Oberfläche (13) gegenüber der ersten Oberfläche (12) umfasst und die ausgehöhlte Aussparung (11) von der ersten Oberfläche (12) zu der zweiten Oberfläche (13) durchgeht,
wobei die Farbschicht (21) mit einer Vielzahl von winzigen Löchern versehen ist und die Vielzahl der winzigen Löcher so eingerichtet sind, dass Licht von dem optischen Fingerabdruckmodul (30) übertragen werden kann;
wobei die Vielzahl der winzigen Löcher ein erstes winziges Loch (212) und ein zweites winziges Loch (213) beinhalten, wobei das erste winzige Loch (212) so eingerichtet ist, dass das durch das optische Fingerabdruckmodul (30) emittierte Licht nach außen übertragen werden kann, und das zweite winzige Loch (213) so eingerichtet ist, dass das von außen reflektierte Licht zu dem optischen Fingerabdruckmodul (30) übertragen werden kann.

2. Anzeigevorrichtung gemäß Anspruch 1, wobei das lichtabschirmende Panel (10) mit einer Vielzahl von ausgehöhlten Aussparungen (11) versehen ist, und eine Vielzahl von optischen Fingerabdruckmodulen (30) an der Vielzahl der ausgehöhlten Aussparungen (11) befestigt ist.

3. Anzeigevorrichtung gemäß Anspruch 1, wobei die Vielzahl der winzigen Löcher in einem Array angeordnet sind.

4. Anzeigevorrichtung gemäß einem der Ansprüche 1 bis 3, wobei das lichtabschirmende Panel (10) aus Schaum hergestellt ist.

5. Anzeigevorrichtung gemäß einem der Ansprüche 1 bis 4, wobei das Anzeigepanel (20) ein Substrat (25) und eine Anzeigeschicht (26) umfasst, wobei das Substrat (25) über das lichtabschirmende Panel (10) gelegt ist und die Anzeigeschicht (26) über eine Seite des Substrats (25) gelegt ist, die von dem lichtabschirmenden Panel (10) weg weist.

6. Anzeigevorrichtung gemäß Anspruch 5, wobei das Anzeigepanel (20) eine Flüssigkristallanzeige (20) ist, das Substrat (25) ein Dünnschichttransistorsubstrat (25) ist, und die Anzeigeschicht (26) eine Flüssigkristallschicht ist.

7. Anzeigevorrichtung gemäß Anspruch 6, wobei das Anzeigepanel (20) ferner ein buntes Substrat (27), das an einer von dem Substrat (25) entfernten Seite der Anzeigeschicht (26) befestigt ist, einen oberen Polarisierer (28), der an einer von der Anzeigeschicht (26) entfernten Seite des bunten Substrats (27) befestigt ist, einen unteren Polarisierer (29), der an einer von der Anzeigeschicht (26) entfernten Seite des Substrats (25) befestigt ist, und eine Hintergrundlichtquelle (20c), die an einer von dem Substrat (25) entfernten Seite des unteren Polarisierers (29) befestigt ist, umfasst.

8. Anzeigevorrichtung gemäß Anspruch 5, wobei das Anzeigepanel (20) ein OLED-Panel (20) ist, das Substrat (25) ein Glassubstrat ist und die Anzeigeschicht (26) eine organische Leuchtschicht ist.

9. Anzeigevorrichtung gemäß einem der Ansprüche 1 bis 8, wobei der Bildschirm (100) ferner eine lichtdurchlässige Abdeckplatte (40) umfasst, die lichtdurchlässige Abdeckplatte (40) über eine von dem lichtabschirmenden Panel (10) entfernte Seite des Anzeigepanels (20) gelegt ist und die lichtdurchlässige Abdeckplatte (40) das Anzeigepanel (20) abdeckt.

10. Anzeigevorrichtung gemäß einem der Ansprüche 1 bis 9, wobei das optische Fingerabdruckmodul (30) einen Sockel (31), eine lichtemittierende Quelle (32), eine lichtempfangende Quelle (33) umfasst, wobei die lichtemittierende Quelle (32) und die lichtempfangende Quelle (33) beide an dem Sockel (31) befestigt sind, wobei die lichtemittierende Quelle (32) dazu eingerichtet ist, Licht nach außen durch das Anzeigepanel (20) zu emittieren, und die lichtempfangende Quelle (33) dazu eingerichtet ist, Licht zu empfangen, das von außen durch das Anzeigepanel (20) reflektiert wird.

11. Mobiles Endgerät umfassend eine Anzeigevorrichtung gemäß einem der Ansprüche 1 bis 10.

## Revendications

1. Dispositif d'affichage comprenant un écran d'affichage (100) et un module d'empreintes digitales optique (30), l'écran d'affichage (100) comprenant un panneau pare-lumière (10) et un panneau d'affichage (20), le panneau pare-lumière et le module d'empreintes digitales optique étant situés au niveau d'un côté arrière du panneau d'affichage, le panneau pare-lumière (10) étant muni d'une rainure creuse (11), le module d'empreintes digitales optique (30) étant fixé sur la rainure creuse (11), le panneau d'affichage (20) étant configuré pour être superposé sur un côté du panneau pare-lumière (10) vers un utilisateur, un côté du panneau d'affichage (20) vers le panneau pare-lumière (10) étant muni d'une couche d'encre (21), une zone de projection orthographique de la couche d'encre (21) sur le panneau pare-lumière (10) coïncidant avec la rainure creuse (11), et une chromaticité de la couche d'encre (21) étant cohérente avec la chromaticité d'un côté du panneau pare-lumière (10) vers le panneau d'affichage (20) ;
dans lequel le panneau pare-lumière (10) comprend une première surface (12) vers le panneau d'affichage 20) et une seconde surface (13) opposée à la première surface (12), la rainure creuse (11) allant de la première surface (12) jusqu'à la seconde surface (13),
dans lequel la couche d'encre (21) est munie d'une pluralité de minuscules orifices, et les minuscules orifices sont configurés de sorte que la lumière du module d'empreintes digitales optique (30) puisse être transmise ;
dans lequel les minuscules orifices comprennent un premier orifice minuscule (212) et un second orifice minuscule (213), le premier orifice minuscule (212) est configuré de sorte que la lumière émise par le module d'empreintes digitales optique (30) puisse être transmise vers l'extérieur, et le second orifice minuscule (213) est configuré de sorte que la lumière réfléchie par l'extérieur puisse être transmise vers le module d'empreintes digitales optique (30).

2. Dispositif d'affichage selon la revendication 1, dans lequel le panneau pare-lumière (10) est muni d'une pluralité de rainures creuses (11), et plusieurs modules d'empreintes digitales optiques (30) sont fixés sur la pluralité de rainures creuses (11) respectivement.

3. Dispositif d'affichage selon la revendication 1, dans lequel les minuscules orifices sont disposés en réseau.

4. Dispositif d'affichage selon l'une quelconque des revendications 1 à 3, dans lequel le panneau pare-lumière (10) est en mousse.

5. Dispositif d'affichage selon l'une quelconque des revendications 1 à 4, dans lequel le panneau d'affichage (20) comprend un substrat (25) et une couche d'affichage (26), le substrat (25) est superposé sur le panneau pare-lumière (10), et la couche d'affichage (26) est superposée sur un côté du substrat (25) éloigné du panneau pare-lumière (10).

6. Dispositif d'affichage selon la revendication 5, dans lequel le panneau d'affichage (20) est un panneau d'affichage à cristaux liquides (20), le substrat (25) est un substrat de transistor à couches minces (25), et la couche d'affichage (26) est une couche de cristaux liquides.

7. Dispositif d'affichage selon la revendication 6, dans lequel le panneau d'affichage (20) comprend en outre un substrat de couleur (27) fixé sur un côté de la couche d'affichage (26) éloigné du substrat (25), un polariseur supérieur (28) fixé sur un côté du substrat de couleur (27) éloigné de la couche d'affichage (26), un polariseur inférieur (29) fixé sur un côté du substrat (25) éloigné de la couche d'affichage (26), et une source de rétroéclairage (20c) fixée sur un côté du polariseur inférieur (29) éloigné du substrat (25).

8. Dispositif d'affichage selon la revendication 5, dans lequel le panneau d'affichage (20) est un panneau d'affichage à diodes électroluminescentes organiques (20), le substrat (25) est un substrat en verre, et la couche d'affichage (26) est une couche luminescente organique.

9. Dispositif d'affichage selon l'une quelconque des revendications 1 à 8, dans lequel l'écran d'affichage (100) comprend en outre une plate de recouvrement transparente à la lumière (40), la plaque de recouvrement transparente à la lumière (40) est superposée sur un côté du panneau d'affichage (20) éloigné du panneau pare-lumière (10), et la plaque de recouvrement transparente à la lumière (40) recouvre le panneau d'affichage (20).

10. Dispositif d'affichage selon l'une quelconque des revendications 1 à 9, dans lequel le module d'empreintes digitales optique (30) comprend une base (31), une source d'émission de lumière (32), et une source de réception de lumière (33), la source d'émission de lumière (32) et la source de réception de lumière (33) sont toutes deux fixées sur la base (31), la source d'émission de lumière (32) est configurée pour émettre de la lumière vers l'extérieur par le biais du panneau d'affichage (20), et la source de réception de lumière (33) est configurée pour recevoir la lumière réfléchie par l'extérieur par le biais du panneau d'affichage (20).

11. Terminal mobile, comprenant un dispositif d'affichage selon l'une quelconque des revendications 1 à 10.
